# EUROPÄISCHE PATENTSCHRIFT

(11) **EP 1 846 507 B1**
(45) Veröffentlichungstag und Bekanntmachung des Hinweises auf die Patenterteilung: **16.09.2009**
(21) Anmeldenummer: 06706435.2
(22) Anmeldetag: 26.01.2006
(51) Int. Cl.: C08L 83/04, B01D 53/02, B01D 53/04, B01D 53/40, B01D 53/56, B01J 20/26

(54) **VERFAHREN ZUR ABSORPTION UND NEUTRALISATION VON SÄUREN**
PROCESS FOR THE ABSORPTION AND NEUTRALISATION OF ACIDS
PROCEDE D'ABSORPTION ET DE NEUTRALISATION D'ACIDES

(30) Priorität: 08.02.2005 DE 102005005634
(43) Veröffentlichungstag der Anmeldung: 24.10.2007
(73) Patentinhaber: Wacker Chemie AG, 81737 München (DE)
(72) Erfinder: MÜLLER, Johann, 94357 Konzell (DE)
(74) Vertreter: Budczinski, Angelika
(86) Internationale Anmeldenummer: PCT/EP2006/000693
(87) Internationale Veröffentlichungsnummer: WO 2006/084585

(56) Entgegenhaltungen:
- EP-A- 0 686 670
- EP-A- 0 841 377
- WO-A-97/06888
- DE-A- 3 800 563
- DE-A1- 2 614 236
- US-A- 4 680 363
- US-A- 5 023 295
- US-A- 5 977 243

## Beschreibung

Die Erfindung betrifft durch Vernetzung hergestellte Formkörper sowie die Verwendung dieser Formkörper zur Absorption und Neutralisation von Säuren.

Vernetzbare Massen auf der Basis von Organosiliciumverbindungen mit unterschiedlichen Arten von Füllstoffen und Zusätzen sind vielfach bekannt. Hierzu sei beispielsweise auf EP-B 841 377 verwiesen, in der insbesondere Organopolysiloxanmassen beschrieben werden, die nach der Vernetzung Vulkanisate mit grifftrockener Oberfläche ergeben.

Gegenstand der Erfindung ist ein Verfahren zur Absorption und Neutralisation von Säuren in flüssigem oder gasförmigem Milieu, dadurch gekennzeichnet, dass Formkörper eingesetzt werden, hergestellt durch Vernetzung von zu Elastomeren vernetzbaren Massen auf der Basis von Organosiliciumverbindungen, die Säurefänger enthalten, wobei es sich bei den Formkörpern um Beschichtungen handelt.

Bei den in den erfindungsgemäß eingesetzten Massen enthaltenen Säurefängern kann es sich um beliebige Substanzen handeln, die in der Lage sind, Säuren zu neutralisieren.

Beispiele für Säurefänger sind Metalloxide, wie Aluminiumoxid, Zinkoxid, Calciumoxid und Magnesiumoxid, Metallhydroxide der 2. und 3. Hauptgruppe und 2. Nebengruppe, wie Aluminiumhydroxid, Zinkhydroxid, Calciumhydroxid und Magnesiumhydroxid sowie deren Hydrate; Salze von schwachen Säuren mit starken Basen, wie Zinkcarbonat, Calciumcarbonat und Magnesiumcarbonat sowie die entsprechenden Hydrogencarbonate; Ammoniumsalze, wie Ammoniumcarbonat und Ammoniumhydrogencarbonat; organische Substanzen, die Säuren neutralisieren können, wie Harnstoff und Tetramethylharnstoff; Amine, wie z. B. Kokosfettamin, Aminosilane und aminofunktionelle Siloxane; sowie Carbamate, wie z. B. Ammoniumcarbamat.

Die erfindungsgemäß eingesetzten Säurefänger sind bei Raumtemperatur und einem Druck der umgebenden Atmosphäre, also zwischen 900 und 1100 hPa, fest oder flüssig, bevorzugt fest.

Bevorzugt handelt es sich bei den erfindungsgemäß eingesetzten festen Säurefängern um pulverförmige Feststoffe, wobei die durchschnittliche Teilchengröße bevorzugt kleiner 100 µm, besonders bevorzugt kleiner 50 µm, insbesondere kleiner 20 µm, beträgt.

Bei den erfindungsgemäß eingesetzten flüssigen Säurefängern kann es sich um niedrig- bis hochviskose Flüssigkeiten handeln.

Die erfindungsgemäß eingesetzten Säurefänger sind handelsübliche Produkte oder können nach in der Chemie gängigen Verfahren hergestellt werden.

Die Menge an Säurefänger in den Massen kann in weiten Bereichen variieren, je nach Anwendungsbereich bzw. Wahl der übrigen Komponenten der Masse. Es handelt sich dabei um Mengen von bevorzugt 0,5 bis 80 Gewichtsteilen, besonders bevorzugt 1 bis 70 Gewichtsteilen, insbesondere 2 bis 60 Gewichtsteilen, jeweils bezogen auf 100 Gewichtsteile vernetzbare Masse. Falls saure Bestandteile zur Herstellung der vernetzbaren Massen eingesetzt werden sollen, muss der Säurefänger überstöchiometrisch in entsprechend höheren Mengen eingesetzt werden.

Bei den erfindungsgemäß eingesetzten Massen kann es sich um beliebige, bisher bekannte Typen von zu Elastomeren vernetzbaren Massen auf der Basis von Organosiliciumverbindungen handeln, wie beispielsweise einkomponentige oder zweikomponentige bei Raumtemperatur (sog. RTV-Massen) oder erhöhter Temperatur (sog. HTV-Massen) vulkanisierbare Organopolysiloxanmassen, wobei die Vernetzung durch Kondensation, Anlagerung von Si-gebundenem Wasserstoff an aliphatische Mehrfachbindung oder peroxidisch durch Bildung von Radikalen erfolgen kann. Die vernetzbaren Massen können dabei frei von Füllstoffen sein, können aber auch aktive oder nicht aktive Füllstoffe enthalten.

Art und Menge der üblicherweise in solchen Massen verwendeten Komponenten sind bereits bekannt. Hierzu sei beispielsweise auf US-A 5,268,441, DE-A 44 01 606, DE-A 44 05 245 und DE-A 43 36 345 verwiesen.

Die erfindungsgemäß eingesetzten Säurefänger können dabei beliebig mit den anderen Komponenten der vernetzbaren Massen vermischt werden. So können sie als letzter Schritt in die ansonsten fertige Siliconkautschukformulierung eingemischt oder während der Herstellung der Siliconkautschukmischung eingearbeitet werden. Die Säurefänger können aber auch in eines bzw. mehrere der eingesetzten Komponenten vorgemischt werden.

Der Mischprozess zur Herstellung der Massen ist bevorzugt ein einfaches mechanisches Vermengen. Je nach Konsistenz und Viskosität des Basismediums kann der Mischprozess an Walzwerken, Kneter, Dissolver, Z-Mischer, Kugelmühlen oder einfachen Rührwerken erfolgen. Der Mischprozess wird vorzugsweise schon der Einfachheit halber bei Umgebungsdruck durchgeführt. Jedoch ist auch ein Mischen bei reduziertem oder erhöhtem Druck möglich. Ebenso der Einfachheit halber wird der Mischprozess bevorzugt bei Umgebungstemperatur durchgeführt. Es ist jedoch auch möglich, bei erhöhter Temperatur oder unter Kühlen zu mischen.

Die erfindungsgemäß eingesetzten Massen haben den Vorteil, dass sie einfach in der Herstellung und gut verarbeitbar sind.

Des Weiteren haben die Massen den Vorteil, dass daraus Vulkanisate hergestellt werden können, die erhöhte Stabilität gegen Säuren aufweisen, also in saurer Umgebung länger stabil bleiben, oder sogar Säuren in der Umgebung neutralisieren können.

Die Massen können unter den gleichen Bedingungen vernetzen gelassen werden wie bisher bekannte vernetzbare Massen auf der Basis von Organosiliciumverbindungen. Dabei können als Herstellverfahren alle gängigen Prozesse zur Verarbeitung von Siliconkautschuken angewandt werden. Beispiele hierfür sind Kalandrieren, Formpressen, Formspritzen, Extrudieren und Gießen.

Bei den erfindungsgemäß eingesetzten Formkörpern handelt es sich um Beschichtungen.

Die Massen können beispielsweise zum Beschichten von textilen und nichttextilen Flächengebilden, wie Gewebe, Gewirke, Gelege, Gestricke, Vliese und Filze sowie Gelege aus Metalldrähten oder Metallfasern, und auf Formartikel aus Metall, Kunststoff, Holz, Gips, Glas, Keramik oder Mineralstoffen, wie Mauerwerke, verwendet werden.

Die erfindungsgemäß eingesetzten Beschichtung kann nach beliebigen Verfahren, wie im Rakelverfahren, Tauchverfahren, Extrusionsverfahren, Spritz- oder Sprühverfahren, aufgebracht werden. Auch alle Arten von Rollenbeschichtungen, wie Gravurwalzen, Pflatschen oder Auftrag über Mehrwalzensysteme, sowie Siebdruck sind möglich.

Dabei ist das Beschichtungsgewicht so gewählt, dass die in der Beschichtungsmasse enthaltene Menge an Säurefänger mindestens stöchimetrisch ausreicht, die im späteren Einsatz des Fertigartikels zu erwartende Säuremenge zu neutralisieren. Dies ist durch einfache chemische Stöchiometrie zu errechnen.

Die erfindungsgemäß beschichteten Gewebe können überall da eingesetzt werden, wo saure Gase oder flüssige Säure durch Kontakt mit der Oberfläche neutralisiert werden sollen und die Beständigkeit der Beschichtung im sauren Milieu erhöht werden soll.

Beispiele sind Kompensatoren für Abgasleitungen, Sicherheitsrückhaltesysteme, Heißluftballons, Schutzkleidung oder Schutzzelte gegen saure Gase. Im technischen Bereich werden die beschichteten Gewebe vorteilhaft für Förderbänder, Kompensatoren, Filter oder Isolationsmaterialien eingesetzt. Weiterhin werden mit den erfindungsgemäßen Materialien beschichtete Substrate in Anlagen zur Reinigung von Gasen und Flüssigkeiten eingesetzt. Vorhänge aus erfindungsgemäß beschichteten Geweben können saure Anteile in der Raumluft neutralisieren.

Durch Vernetzung der Massen werden Vulkanisate erhalten, die vorteilhafterweise erhöhte Schutzwirkung des damit beschichteten Substrates aufweisen.

Die Vulkanisate haben den Vorteil, dass sie erhöhte Beständigkeit gegen Säuren aufweisen.

Die Vulkanisate haben weiterhin den Vorteil dass Säuren in der Umgebung neutralisiert werden können.

Die Vulkanisate können für alle Zwecke eingesetzt werden, für die auch bisher Vulkanisate auf der Basis von Organosiliciumverbindungen eingesetzt worden sind. Insbesondere eignen sie sich für alle Zwecke, bei denen Säurebeständigkeit und das Vermögen, Säure zu.neutralisieren, eine Rolle spielen.

Das erfindungsgemäße Verfahren kann bei Temperaturen von bevorzugt -50 bis 1500°C, besonders bevorzugt -50 bis 1000°C, durchgeführt werden.

Das erfindungsgemäße Verfahren kann bei Drücken von bevorzugt 100 bis 200 000 hPa, besonders bevorzugt 100 bis 50000 hPa, durchgeführt werden.

Bei den im erfindungsgemäßen Verfahren absorbierten bzw. neutralisierten Säuren handelt es sich bevorzugt um Halogenwasserstoffe, wie HCl, HBr und HF, nitrose Gase und daraus generierte Säuren, H₂SO₃, H₂SO₄, Phosphorsäuren, HCN, besonders bevorzugt um Halogenwasserstoffsäuren und Schwefelsäuren.

Beispiele für das flüssige Milieu, in denen die Säuren absorbiert bzw. neutralisiert werden, sind Wasser, wässrige Salzlösungen, organische Lösungsmittel, Mineralöle, Pflanzenöle und Speiseöle, wobei wässrige Medien bevorzugt sind.

Beispiele für das gasförmige Milieu, in denen die Säuren absorbiert bzw. neutralisiert werden, sind Luft, Abgase aus Verbrennungsanlagen, Erdgas, Gase in pneumatischen Systemen und Treibgase für Sicherheitsrückhaltesysteme, wobei Luft und Stickstoff bevorzugt sind.

Bei dem erfindungsgemäßen Verfahren wird der Formkörper einfach mit dem flüssigen oder gasförmigen Medium in Kontakt gebracht.

Das erfindungsgemäße Verfahren findet insbesondere Anwendung bei der Erdgasentschwefelung, Abgasreinigung und Reduzierung des Säuregehalts in Treibgasen in Sicherheitsrückhaltesystemen.

Das erfindungsgemäße Verfahren hat den Vorteil, dass es einfach in der Anwendung ist, wobei Säuren äußerst effektiv absorbiert bzw. neutralisiert werden können.

Das erfindunsggemäße Verfahren hat des Weiteren den Vorteil, dass keine zusätzlichen Bauteile (z. B. Filter) benötigt werden.

Bei den erfindungsgemäß eingesetzten Massen auf der Basis von Organosiliciumverbindungen kann es sich um unter Ausschluss von Wasser lagerfähige, bei Zutritt von Wasser bei Raumtemperatur durch Kondensation zu Elastomeren vernetzbare Massen handeln.

Bei den durch Kondensation vernetzbaren Massen handelt es sich vorzugsweise um solche, die
(a) kondensationsfähige Gruppen aufweisende Organosiliciumverbindung,
(b) Organosiliciumverbindung mit mindestens drei Si-gebundenen hydrolysierbaren Resten,
(c) Kondensationskatalysator,
(d) Säurefänger und gegebenenfalls
(e) weitere Stoffe
   enthalten.

Bei den durch Kondensation vernetzbaren Massen kann es sich um Einkomponenten-Massen wie auch um Zweikomponenten-Massen handeln, wobei in letzterer eine Komponente nicht gleichzeitig die Bestandteile (a), (b) und (c) enthält.

Als kondensationsfähige Gruppen aufweisende Organosiliciumverbindung (a) wird vorzugsweise solche der allgemeinen Formel

HO (SiR₂O) mSiR₂OH (I)

eingesetzt, wobei R gleiche oder verschiedene, gegebenenfalls substituierte einwertige Kohlenwasserstoffreste bedeuten und m eine ganze Zahl im Wert von mindestens 20, bevorzugt eine Zahl von 50 bis 100000 ist.

Obwohl durch Formel (I) nicht dargestellt, können zusätzlich zu den Diorganosiloxaneinheiten (SiR₂O) noch andere Siloxaneinheiten, wie solche der Formeln RSiO_{3/2}, R₃SiO_{1/2} und SiO_{4/2} vorliegen, wobei R jeweils die oben dafür angegebene Bedeutung hat.

Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der Organopolysiloxane (a).

Die Organosiliciumverbindungen (a) besitzen vorzugsweise eine Viskosität von 100 bis 500 000 mm²/s bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Bevorzugt handelt es sich bei Rest R um Reste mit 1 bis 18 Kohlenstoffatomen, besonders bevorzugt um Propyl-, Hexyl- und Octylreste, insbesondere um den Methylrest.

Als Organosiliciumverbindungen mit mindestens drei Si-gebundenen hydrolysierbaren Gruppen (b) werden vorzugsweise Silane der allgemeinen Formel

R¹₄₋ₙSiZₙ (II)

und/oder deren 2 bis 10 Siliciumatome je Molekül aufweisende Teilhydrolysate verwendet,
wobei
R¹ gleich oder verschieden sein kann und eine für R angegebene Bedeutung hat,
n 3 oder 4 ist und
Z gleiche oder verschiedene hydrolysierbare Gruppen bedeutet, wie Amino-, Amido-, Aminoxy-, Oximogruppe, wie z. B.
-ON=C(CH₃) (C₂H₅), Alkoxy-, wie z.B. Methoxy- und Ethoxy-, Alkoxyalkoxy-, wie z. B. CH₃-O-C₂H₅-O-, oder Alkenyloxy-, wie z. B. H₂C=(CH₃)CO-.

Bevorzugt handelt es sich bei der hydrolysierbaren Gruppe Z um Alkoxy- oder Oximogruppen.

Bevorzugt handelt es sich bei Rest R¹ um Propyl-, Hexyl-, Octyl-, Vinyl- und Methylreste, wobei Vinyl- und Methylreste besonders bevorzugt sind.

Die Organosiliciumverbindung (b) wird vorzugsweise in einer Menge von 2 bis 10 Gewichtsteilen je 100 Gewichtsteile Organosiliciumverbindung (a) eingesetzt.

Vorzugsweise handelt es sich bei dem Kondensationskatalysator (c) um (Organo-)Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn, wie Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat, Titanalkoholat und Organotitanverbindungen mit mindestens einer Si-O-Ti-Bindung.

Kondensationskatalysator (c) wird vorzugsweise in einer Menge von 0,1 bis 2 Gewichtsteilen je 100 Gewichtsteile Organosiliciumverbindung (a) eingesetzt.

Erfindungsgemäß eingesetzte Säurefänger (d) werden vorzugsweise in einer Menge von 2 bis 80 Gewichtsteilen je 100 Gewichtsteile durch Kondensationsreaktion vernetzbare Masse verwendet.

Der jeweiligen Anwendung entsprechend können den zu Elastomeren vulkanisierbaren Massen weitere Stoffe (e) zugesetzt werden, mit der Maßgabe, dass die Zusätze (e) unterschiedlich sind zu Komponente (a), (b), (c) und (d).

Beispiele für solche weiteren Stoffe (e) sind Füllstoffe, wie z. B. nicht aktive Füllstoffe, Stoffe zur Verbesserung der Oberflächeneigenschaften, wie Haftvermittler, Verarbeitungshilfsmittel, wie etwa Weichmacher, Pigmente, lösliche Farbstoffe, Duftstoffe, Fungicide, rein organische Harze, Korrosionsinhibitoren, Oxidationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wobei es sich bei Komponente (e) bevorzugt um Füllstoffe, Weichmacher und Haftvermittler handelt.

Beispiele für verstärkende Füllstoffe, die als weitere Stoffe (e) eingesetzt werden können, sind pyrogene oder gefällte Kieselsäuren mit BET-Oberflächen von mindestens 50 m²/g sowie Furnace-Ruß und Acetylen-Ruß, wobei die genannten Kieselsäurefüllstoffe hydrophilen Charakter haben oder nach bekannten Verfahren hydrophobiert sein können.

Beispiele für nichtverstärkende Füllstoffe, die als weitere Stoffe (e) eingesetzt werden können und unterschiedlich sind zu Komponente (d), sind Quarzmehl, Diatomeenerde, Zirkoniumsilicat, Zeolithe, Bariumsulfat, Gips sowie Kunststoffpulver, wie Polyacrylnitrilpulver oder Polytetrafluorethylenpulver. Des Weiteren können als Füllstoffe faserige Komponenten, wie Glasfasern und Kunststofffasern, eingesetzt werden. Die BET-Oberfläche dieser Füllstoffe liegt vorzugsweise unter 50 m²/g.

Beispiele für Weichmacher, die als Komponente (e) eingesetzt werden können, sind mit Trimethylsilylgruppen oder Hydroxygruppen terminierte Polydimethylsiloxane mit einer Viskosität von maximal 1000 mm²/s bei 25°C oder auch Diphenylsilandiol.

Beispiele für Haftvermittler sind Aminosilane, wie Aminoethylaminopropyltriethoxysilan, oder Polysiloxane, die Aminoethylaminopropylsiloxygruppen enthalten.

Beispiele für Hitzestabilisatoren sind Übergangsmetallfettsäuresalze, wie Eisenoctoat, Übergangsmetallsilanolate, wie Eisensilanolat, sowie Cer(IV)-Verbindungen.

Über die Komponenten (a) bis (e) hinausgehend enthalten die durch Kondensation vernetzbaren Massen vorzugsweise keine weiteren Stoffe.

Bei den einzelnen in den durch Kondensation vernetzbaren Massen eingesetzten Komponenten kann es sich jeweils um eine Art dieser Komponenten wie auch um ein Gemisch aus mindestens zwei Arten dieser Komponenten handeln.

Die Herstellung der durch Kondensation vernetzbaren Massen auf der Basis von Organosiliciumverbindungen kann nach bekannten Verfahren erfolgen, wie beispielsweise durch einfaches Mischen der einzelnen Komponenten. Das Vermischen erfolgt vorzugsweise bei Raumtemperatur und vorzugsweise wird bei diesem Vermischen der Zutritt von Wasser vermieden. Falls gewünscht, kann dieses Vermischen aber auch bei höheren Temperaturen erfolgen, z. B. bei einer Temperatur im Bereich von 25 bis 80°C.

Für die Vernetzung der Massen reicht der übliche Wassergehalt der Luft aus. Die Vernetzung kann, falls erwünscht, auch bei höheren Temperaturen als Raumtemperatur, z. B. bei 25 bis 120°C, oder bei niedrigeren Temperaturen als Raumtemperatur, z. B. bei -10 bis 25°C, durchgeführt werden. Ebenso kann die Vernetzung auch bei Konzentrationen von Wasser durchgeführt werden, die den normalen Wassergehalt der Luft übersteigen.

Die Massen eignen sich zur Herstellung von Schutzüberzügen oder zur Herstellung von klebrige Stoffe abweisenden Überzügen, sowie zum Beschichten von Formteilen aus Kunststoffen, Metallen und Elastomeren und zum Beschichten von textilen Flächengebilden.

Bei den Massen auf der Basis von Organosiliciumverbindungen kann es sich um solche handeln, die vernetzbar sind durch Anlagerung von Si-gebundenem Wasserstoff an aliphatische Kohlenstoff-Kohlenstoff-Mehrfachbindung.

Vorzugsweise enthalten die additionsvernetzbaren Massen auf der Basis von Organosiliciumverbindungen
(1) Organosiliciumverbindungen, die SiC-gebundene Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die SiC-gebundene Reste mit aliphatischen Kohlenstoff-Kohlenstoff-Mehrfachbindungen und Si-gebundene Wasserstoffatome aufweisen,
(4) die Anlagerung von Si-gebundenem Wasserstoff an aliphatische Mehrfachbindung fördernden Katalysator,
(5) Säurefänger
   und gegebenenfalls
(6) weitere Stoffe.

Handelt es sich bei der Masse um eine additionsvernetzende 2-Komponenten-Siliconkautschukmasse, so können die beiden Komponenten der Siliconkautschukmassen alle Bestandteile in beliebigen Kombinationen und Mengenverhältnissen enthalten, mit der Maßgabe, dass eine Komponente nicht gleichzeitig die Bestandteile (1), (2) und (3) enthält.

Bei den Organosiliciumverbindungen (1) handelt es sich vorzugsweise um lineare, cyclische oder verzweigte Siloxane aus Einheiten der Formel

R²ₛR³ₜSiO_{(4-s-t)/2} (III),

wobei
R² gleich oder verschieden sein kann und SiC-gebundener, aliphatisch ungesättigter Kohlenwasserstoffrest bedeutet,
R³ gleich oder verschieden sein kann und gegebenenfalls substituierter, SiC-gebundener aliphatisch gesättigter Kohlenwasserstoffrest bedeutet,
s 0, 1, 2 oder 3, bevorzugt 0, 1 oder 2, ist und
t 0, 1, 2 oder 3 ist, mit der Maßgabe, dass die Summe s+t kleiner oder gleich 3 beträgt und mindestens zwei Reste R² pro Molekül vorhanden sind.

Die Organosiliciumverbindungen (1) besitzen vorzugsweise eine durchschnittliche Viskosität von 10² bis 10⁶ mm²/s bei 25°C.

Vorzugsweise handelt es sich bei Rest R² um aliphatische Mehrfachbindung aufweisende Kohlenwasserstoffreste mit 2 bis 18 Kohlenstoffatomen, wie Vinyl-, Allyl-, Methallyl-, 2-Propenyl-, 3-Butenyl-, 4-Pentenylrest, 5-Hexenyl-, Butadienyl-, Hexadienyl-, Cyclopentenyl-, Cyclopentadienyl-, Cyclohexenyl-, Ethinyl-, Propargyl- und 2-Propinylrest, wobei solche Reste R² mit 2 bis 6 Kohlenstoffatomen besonders bevorzugt sind, insbesondere der Vinyl- und Allylrest.

Beispiele für Reste R³ sind alle für Rest R angegebenen Beispiele für aliphatisch gesättigte Reste.

Bei Rest R³ handelt es sich vorzugsweise um gegebenenfalls substituierte aliphatisch gesättigte, monovalente Kohlenwasserstoffreste mit 1 bis 18 Kohlenstoffatomen, besonders bevorzugt um solche mit 1 bis 8 Kohlenstoffatomen, insbesondere um den Methylrest.

Besonders bevorzugt handelt es sich bei den Organosiliciumverbindungen (1) um lineare Organopolysiloxane mit einer Viskosität von 200 bis 10⁵ mm²/s bei 25°C der Struktur
(ViMe₂SiO_{1/2}) (ViMeSiO)₀₋₅₀ (Me₂SiO)₃₀₋₂₀₀₀ (ViMe₂SiO_{1/2}),
wobei Me gleich Methyl- und Vi gleich Vinylrest bedeutet.

Als Organosiliciumverbindungen (2), die Si-gebundene Wasserstoffatome aufweisen, werden vorzugsweise lineare, cyclische oder verzweigte Siloxane aus Einheiten der Formel

R⁴ᵤHᵥSiO_{(4-u-v)/2} (IV)

eingesetzt, wobei
R⁴ gleich oder verschieden sein kann und eine oben für R³ angegebene Bedeutung hat,
u 0, 1, 2 oder 3 ist und
v 0, 1 oder 2, bevorzugt 0 oder 1, ist,
mit der Maßgabe, dass die Summe von u+v kleiner oder gleich 3 ist und durchschnittlich mindestens zwei Si-gebundene Wasserstoffatome je Molekül vorliegen.

Die Organosiliciumverbindungen (2) besitzen vorzugsweise eine Viskosität von 10 bis 2̇·10⁴ mm²/s bei 25°C.

Bevorzugt ist die Verwendung einer drei oder mehr SiH-Bindungen pro Molekül enthaltenden Organosiliciumverbindung (2). Bei Verwendung eines nur zwei SiH-Bindungen pro Molekül aufweisenden Bestandteils (2) enthält die Organosiliciumverbindung (1) vorzugsweise mindestens drei aliphatische Kohlenstoff-Kohlenstoff-Mehrfachbindungen pro Molekül. Es wird also vorzugsweise die Organosiliciumverbindung (2) als Vernetzer eingesetzt.

Die Organosiliciumverbindung (2) hat einen Gehalt an Si-gebundenem Wasserstoff von bevorzugt 0,002 bis 1,7 Gew.-% Wasserstoff, besonders bevorzugt zwischen 0,1 und 1,7 Gew.-% Wasserstoff.

Besonders bevorzugt handelt es sich bei den Organosiliciumverbindungen (2) um Organopolysiloxane mit einer Viskosität von 20 bis 1000 mm²/s bei 25°C.

Das Polyorganosiloxan (2) ist vorzugsweise in einer solchen Menge in der härtbaren Siliconkautschukmasse enthalten, dass das Molverhältnis von SiH-Gruppen zu Resten mit aliphatischer Kohlenstoff-Kohlenstoff-Mehrfachbindung der Komponente (1) zwischen 0,5 und 5, vorzugsweise zwischen 1,0 und 3,0, liegt.

Falls Organosiliciumverbindungen (3) eingesetzt werden, handelt es sich vorzugsweise um solche aus Einheiten der Formel
R³_{f}SiO_{(4-f)/2} , R³_{g}R²SiO_{(3-g)/2} und R³ₕHSiO_{(3-h) /2} ,
wobei R² und R³ die oben dafür angegebenen Bedeutungen haben,
f 0, 1, 2 oder 3 ist,
g 0, 1 oder 2 ist und
h 0, 1 oder 2 ist,
mit der Maßgabe, dass je Molekül mindestens 2 Reste R² und mindestens 2 Si-gebundene Wasserstoffatome vorliegen.

Beispiele für Organosiliciumverbindungen (3) sind solche aus SiO_{4/2} R³₃SiO_{1/2}-, R³₂R²SiO_{1/2}- und R³₂HSiO_{1/2}-Einheiten, sogenannte MQ-Harze, wobei diese Harze zusätzlich R³SiO_{3/2}- und R³₂SiO-Einheiten enthalten können, sowie lineare Organopolysiloxane im wesentlichen bestehend aus R³₂R²SiO_{1/2}-, R³₂SiO- und R³HSiO-Einheiten mit R² und R³ gleich den obengenannten Bedeutungen.

Die Organosiliciumverbindungen (3) besitzen vorzugsweise eine Viskosität von 0,01 bis 500 000 Pa·s, besonders bevorzugt 0,1 bis 100 000 Pa·s, jeweils bei 25°C.

Als Bestandteil (4), der die Additionsreaktion (Hydrosilylierung) zwischen den Resten mit aliphatischer Kohlenstoff-Kohlenstoff-Mehrfachbindung und Si-gebundenem Wasserstoff fördert, können in den Massen alle bisher bekannten Hydrosilylierungskatalysatoren verwendet werden. ,

Beispiele für Hydrosilylierungskatalysatoren (4) sind Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sein können.

Vorzugsweise werden als Katalysator (4) Platin sowie dessen Verbindungen und Komplexe verwendet.

Die Menge des Katalysators (4) richtet sich nach der gewünschten Vernetzungsgeschwindigkeit und der jeweiligen Verwendung sowie ökonomischen Gesichtspunkten. Die Massen enthalten Katalysatoren (4) in solchen Mengen, dass ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der vernetzbaren Masse, resultiert.

Bei dem erfindungsgemäß eingesetzten Säurefänger (5) handelt es sich bevorzugt um solche, welche die für die Additionsvernetzung eingesetzten Katalysatoren nicht inhibieren, wie z. B. Metalloxide, wie Aluminiumoxid, Zinkoxid, Calciumoxid und Magnesiumoxid, Metallhydroxide der 2. und 3. Hauptgruppe und 2. Nebengruppe, wie Aluminiumhydroxid, Zinkhydroxid, Calciumhydroxid und Magnesiumhydroxid sowie deren Hydrate; Salze von schwachen Säuren mit starken Basen, wie Zinkcarbonat, Calciumcarbonat und Magnesiumcarbonat sowie die entsprechenden Hydrogencarbonate; Ammoniumsalze, wie Ammoniumcarbonat und Ammoniumhydrogencarbonat; organische Substanzen, die Säuren neutralisieren können, wie Harnstoff und Tetramethylharnstoff; sowie Carbamate, wie z. B. Ammoniumcarbamat.

Erfindungsgemäß eingesetzte Säurefänger (5) werden vorzugsweise in einer Menge von 2 bis 80 Gewichtsteilen je 100 Gewichtsteile durch Additionsreaktion vernetzbare Masse verwendet.

Außer den Komponenten (1) bis (5) können die härtbaren Zusammensetzungen noch alle weiteren Stoffe (6) enthalten, die auch bisher zur Herstellung von additionsvernetzbaren Massen eingesetzt wurden, mit der Maßgabe, dass die weiteren Stoffe (6) unterschiedlich sind zu Komponenten (1) bis (5).

Beispiele für weitere Stoffe (6) sind verstärkende Füllstoffe, nicht verstärkende Füllstoffe, harzartige Polyorganosiloxane, die von den Siloxanen (1), (2) und (3) verschieden sind, Dispergierhilfsmittel, Lösungsmittel, Haftvermittler, Pigmente, Farbstoffe, Weichmacher, organische Polymere, Hitzestabilisatoren, Inhibitoren und Stabilisatoren.

Beispiele gebräuchlicher Inhibitoren, die als Komponente (6) eingesetzt werden können, sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Der Inhibitorgehalt der Massen beträgt vorzugsweise 0 bis 50 000 ppm, besonders bevorzugt 50 bis 2000 ppm, insbesondere 100 bis 800 ppm.

Beispiele für Füllstoffe sind die im Zusammenhang mit den kondensationsvernetzbaren Massen oben angegebenen Beispiele.

Falls Füllstoffe eingesetzt werden, handelt es sich um Mengen von bevorzugt 2 bis 100 Gewichtsteilen, besonders bevorzugt 5 bis 60 Gewichtsteilen, jeweils bezogen auf 100 Gewichtsteile der Komponente (1).

Die Massen können, falls erforderlich, in Flüssigkeiten gelöst, dispergiert, suspendiert oder emulgiert werden. Die Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Insbesondere können die Massen, falls sie hochviskos sind, in Form eines Granulates zubereitet werden.

Die Herstellung der Organopolysiloxanmassen kann nach bekannten Verfahren erfolgen, wie beispielsweise durch gleichmäßige Vermischung der einzelnen Komponenten.

Bei den eingesetzten Komponenten (1) bis (6) kann es sich jeweils um eine einzelne Art einer solchen Komponente, wie auch um ein Gemisch aus mindestens zwei verschiedenen Arten einer solchen Komponente handeln.

Über die Komponenten (1) bis (6) hinausgehend enthalten die durch Additionsreaktion vernetzbaren Massen vorzugsweise keine weiteren Stoffe.

Die durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden.

Die Massen sowie die daraus hergestellten Vernetzungsprodukte werden für die Siliconbeschichtung bzw. Imprägnierung beliebiger Substrate eingesetzt.

Bei den Massen auf der Basis von Organosiliciumverbindungen kann es sich um peroxidisch vernetzbare Massen handeln.

Die peroxidisch vernetzbaren Massen auf der Basis von Organosiliciumverbindungen enthalten vorzugsweise (A) Organosiliciumverbindungen aus Einheiten der allgemeinen Formel

R⁵ᵣSiO_{(4-r)/2} (V),

worin
R⁵ gleich oder verschieden sein kann und einwertiger, gegebenenfalls substituierter Kohlenwasserstoffrest, Hydroxy- oder Alkoxyrest bedeutet und
r 0, 1, 2 oder 3 ist und einen durchschnittlichen Zahlenwert von 1,9 bis 2,1 hat,
(B) die Vernetzung über freie Radikale bewirkendes Agens,
(C) Säurefänger
und gegebenenfalls
(D) weitere Stoffe.

Beispiele für Reste R⁵ sind die für R oben angegebenen Beispiele. Bevorzugt handelt es sich bei Rest R⁵ um einwertige, gegebenenfalls substituierte Kohlenwasserstoffreste mit 1 bis 18 Kohlenstoffatomen, besonders bevorzugt um einwertige, gegebenenfalls substituierte Kohlenwasserstoffreste mit 1 bis 8 Kohlenstoffatomen, insbesondere um den Methyl-, Vinyl-, Phenyl- und 3,3,3-Trifluorpropylrest.

Vorzugsweise handelt es sich bei den Organosiliciumverbindungen (A) um Organopolysiloxane aus Einheiten der Formel (V), in denen mindestens 70 % aller Reste R⁵ die Bedeutung von Si-gebundenen Alkylresten, insbesondere Methylreste, haben, wobei es sich bei den Einheiten der Formel (V) bevorzugt um Diorganosiloxaneinheiten handelt.

Die Endgruppen der Organosiliciumverbindungen (A) können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organosiliciumverbindungen (A) kann es sich um Flüssigkeiten oder hochviskose Substanzen handeln. Vorzugsweise weisen die Organosiliciumverbindungen (A) bei 25°C eine Viskosität zwischen 10³ und 10⁸ mm²/s auf.

Bei der Komponente (B) kann es sich um allgemein ein die Vernetzung über Radikale initiierendes oder bewirkendes Agens handeln, welches auch bisher in peroxidisch vernetzbaren Massen eingesetzt wurde, wobei Peroxide, insbesondere organische Peroxide, bevorzugt sind.

Beispiele für solche organischen Peroxide sind Peroxyketal, z. B. 1,1-Bis(tert.-butylperoxy)-3,3,5-trimethylcyclohexan, 2,2-Bis(tert.-butylperoxy)butan, Diacylperoxide, wie z.B. Acetylperoxid, Isobutylperoxid, Dibenzoylperoxid, Dialkylperoxide, wie z. B. Di-tert-butylperoxid, Tert-butylcumylperoxid, Dicumylperoxid, 2,5-Dimethyl-2,5-di(tert.-butylperoxy)hexan, Bis-(2,4-dichlorbenzoyl)-peroxid und Perester, wie z. B. Tert.-butylperoxyisopropylcarbonat.

Die zu Elastomeren vernetzbaren Organopolysiloxanmassen enthalten Komponente (B) in Mengen von vorzugsweise 0,4 bis 2,0 Gewichtsprozent, besonders bevorzugt 0,7 bis 1,5 Gewichtsprozent, jeweils bezogen auf das Gesamtgewicht der peroxidisch vernetzbaren Masse.

Bei den erfindungsgemäß eingesetzten Säurefängern (C) sind solche bevorzugt, welche keine vorzeitige Zersetzung des verwendeten Peroxides katalysieren können, wie z. B. die oben im Zusammenhang mit additionsvernetzbaren Massen genannten Beispiele für Säurefänger (5).

Erfindungsgemäß eingesetzte Säurefänger (C) werden vorzugsweise in einer Menge von 2 bis 100 Gewichtsteilen je 100 Gewichtsteile peroxidisch vernetzbare Masse verwendet.

Der jeweiligen Anwendung entsprechend können den zu Elastomeren vulkanisierbaren Massen weitere Stoffe (D) zugesetzt werden, mit der Maßgabe, dass die Zusätze (D) unterschiedlich sind zu Komponente (A) bis (C).

Beispiele für solche weiteren Stoffe (D) sind Füllstoffe, Weichmacher, Pigmente und Stabilisatoren, wie etwa Hitzstabilisatoren.

Beispiele für verstärkende und nichtverstärkende Füllstoffe sind die oben im Zusammenhang mit kondensationsvernetzbaren Massen für Füllstoffe angegebenen Beispiele.

Falls die peroxidisch vernetzbaren Massen Füllstoff als Komponente (D) enthalten, handelt es sich um Mengen von vorzugsweise 1 bis 200 Gewichtsteilen, besonders bevorzugt 30 bis 100 Gewichtsteilen, jeweils bezogen auf 100 Gewichtsteile Organosiliciumverbindung (A).

Beispiele für Weichmacher und Hitzestabilisatoren, die als Komponente (D) zugegeben werden können, sind die oben dafür angegebenen Beispiele.

Darüberhinaus enthalten die peroxidisch vernetzbaren Massen vorzugsweise keine weiteren Stoffe.

Bei den jeweiligen zur Herstellung der peroxidisch vernetzbaren Massen eingesetzten Komponenten kann es sich jeweils um eine einzelne Art einer solchen Komponente, wie auch um ein Gemisch aus mindestens zwei verschiedenen Arten einer solchen Komponente handeln.

Die Herstellung der peroxidisch vernetzbaren Organopolysiloxanmassen kann nach bekannten Verfahren erfolgen, wie beispielsweise durch einfaches Mischen der einzelnen Komponenten.

Die peroxidisch vernetzbaren Massen können bei den gleichen Bedingungen vernetzen gelassen werden wie die bisher bekannten peroxidisch vernetzbaren Massen.

Die Massen sowie die daraus hergestellten Elastomere werden zum Aufbringen auf textile oder nichttextile Flächengebilde mit Hilfe eines Kalanders oder durch Extrusion aus einer Breitschlitzdüse eingesetzt.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Vergleichsbeispiel 1

120 g eines α,ω-vinylendständigen Dimethylpolysiloxanes mit einer Viskosität von 20000 mPas und 156 g eines α,ω-vinylendständigen Dimethylpolysiloxanes mit einer Viskosität von 1000 mPas werden mit 55 g einer hochdispersen Kieselsäure mit einer BET-Oberfläche von 300 g/m² (käuflich erhältlich bei der Wacker-Chemie GmbH, D-München unter der Bezeichnung HDK® T 30 vermischt. In diese Mischung werden 0,06 g eines Platinkomplexes von Tetramethyldivinyldisiloxanes, 10 g eines Methylhydrogenpolysiloxanes mit einem Wasserstoffgehalt von 1,2 % und einer Viskosität von 40 mPas und 1,5 g Ethinylcyclohexanol eingearbeitet.
Die so erhaltene Masse wird mit einer Rakel auf Nylongewebe aufgebracht und bei 150°C in 5 Minuten vulkanisiert. Das Beschichtungsgewicht nach der Vulkanisation ist 30 g/m².

### Beispiel 1

In 100 g der in Vergleichsbeispiel 1 beschriebenen Masse werden 25 g Aluminiumhydroxid mit einer Teilchengröße von durchschnittlich 20 µm mit einem Rührer eingemischt.

Die so erhaltene Masse hat eine Viskosität von 140 000 mPas und wird mit einer Rakel auf Nylongewebe aufgebracht und bei 150°C in 5 Minuten vulkanisiert. Das Beschichtungsgewicht nach der Vulkanisation ist 30 g/m²

### Vergleichsbeispiel 2

164 g eines α,ω-hydroxyendständigen Dimethylpolysiloxanes mit einer Viskosität von 80 000 mPas und 96 g hydrophobierte, hochdisperse Kieselsäure mit einer BET-Oberfläche von 130 g/m² (käuflich erhältlich bei der Wacker-Chemie GmbH, D-München unter der Bezeichnung HDK® H 20) werden in einem Kneter vermischt. In die homogene Mischung werden 103 g α,ω-hydroxyend-ständiges Dimethylpolysiloxan mit einer Viskosität von 1000 mPas eingearbeitet. Dann werden 1,5 g n-Propanol, 18,4 g Methyltriethoxysilan und 0,26 g Dibutylzinndiacetat zugegeben.

Die so erhaltene Masse wird mit einer Rakel auf Nylongewebe aufgebracht und bei 25°C und 50 % rel. Luftfeuchtigkeit 48 Stunden vulkanisiert. Das Beschichtungsgewicht nach der Vulkanisation ist 30 g/m².

### Beispiel 2

In 100 g der in Vergleichsbeispiel 2 beschriebenen Masse werden 25 g Calciumcarbonat mit einer Teilchengröße von durchschnittlich 10 µm an einem Rührer eingemischt.

Die so erhaltene Masse wird mit einer Rakel auf Nylongewebe aufgebracht und bei 25°C und 50 % rel. Luftfeuchtigkeit 48 Stunden vulkanisiert. Das Beschichtungsgewicht nach der Vulkanisation ist 30 g/m².

### Vergleichsbeispiel 3

728 g eines α,ω-vinylendständigen Dimethylpolysiloxanes mit einer Brabenderplastizität von 5,2 Nm wird in einem Kneter mit 10,9 g eines α,ω-hydroxyendständigen Dimethylpolysiloxanes mit einer Viskosität von 65 mPas und mit 4,3 g eines Polysiloxanes der Formel HO[SiO(CH₃)CH=CH₂]₁₀[SiO(CH₃)₂]₄₀OH vermischt. In diese Mischung werden 265 g einer hochdispersen Kieselsäure mit einer BET-Oberfläche von 150 g/m² (käuflich erhältlich bei der Wacker-Chemie GmbH, D-München unter der Bezeichnung HDK® H 15) eingearbeitet. Gegen Ende der Mischarbeit werden 8 g Dibenzoylperoxid eingemischt.

Die so erhaltene Siliconkautschukpaste wird mit einem Kalander auf ein Nylongewebe aufkalandriert und 3 Minuten bei 170°C vernetzt. Das Beschichtungsgewicht beträgt nach der Vulkanisation 40 g/m².

### Beispiel 3

In 100 g der in Vergleichsbeispiel 3 beschriebenen Masse werden 20 g Harnstoff an einem Kneter eingemischt.

Die so erhaltene Siliconkautschukpaste wird mit einem Kalander auf ein Nylongewebe aufkalandriert und 3 Minuten bei 170°C vernetzt. Das Beschichtungsgewicht nach der Vulkanisation beträgt 40 g/m².

### Beispiel 4

In jeweils einem Glasgefäß mit 1000 ml Inhalt wird von jedem der in den Beispielen 1 bis 3 und den Vergleichsbeispielen V1 bis V3 beschichteten Gewebe ein Stück mit 100 cm² eingelegt. Das Glasgefäß wird in jedem Fall mit Luft, die 100 ppm HCl-Gas enthält, gefüllt.

Anschließend wird das Gefäß verschlossen 3 Minuten in einen Ofen bei 150°C gelagert und dann auf Raumtemperatur abkühlen gelassen sowie der HCl-Gehalt im Gasraum bestimmt. Die Ergebnisse finden sich in Tabelle 1.

**Tabelle 1**

| | | | | | | |
|---|---|---|---|---|---|---|
| Gewebe aus Beispiel | V1 | 1 | V2 | 2 | V3 | 3 |
| HCl-Gehalt im Gasraum | 96 ppm | 32 ppm | 94 ppm | 12 ppm | 97 ppm | 43 ppm |

### Beispiel 5

Ein Sicherheitsbehälter mit ca. 0,5 m³ Inhalt wird aus dem gemäß Beispiel 2 beschichteten Gewebe gefertigt. Der Behälter wird mit einem Gasgemisch aus Stickstoff und 50 ppm HCl befüllt. Zeitlich abhängig reduziert sich der HCl-Gehalt im Gasgemisch.

### Beispiel 6

Aus der Masse gemäß Beispiel 3 wird an einem Extruder ein Schlauch mit einem Innendurchmesser von 10 mm und einer Wandstärke von 2 mm extrudiert und vulkanisiert. Durch 10 m des so erhalteten Schlauches wird ein Gasgemisch aus Stickstoff und 50 ppm HCl geleitet. Abhängig von der Durchflussgeschwindigkeit reduziert sich der HCl-Gehalt am Ende des Schlauches.

## Patentansprüche

1. Verfahren zur Absorption und Neutralisation von Säuren in flüssigem oder gasförmigem Milieu, **dadurch gekennzeichnet, dass** Formkörper eingesetzt werden, hergestellt durch Vernetzung von zu Elastomeren vernetzbaren Massen auf der Basis von Organosiliciumverbindungen, die Säurefänger enthalten, wobei es sich bei den Formkörpern um Beschichtungen handelt.

2. Verfahren gemäß Anspruch 1, **dadurch gekennzeichnet, dass** es sich um unter Ausschluss von Wasser lagerfähige, bei Zutritt von Wasser bei Raumtemperatur durch Kondensation zu Elastomeren vernetzbare Massen handelt.

3. Verfahren gemäß Anspruch 2, **dadurch gekennzeichnet, dass** es sich bei den durch Kondensation vernetzbaren Massen um solche handelt, die
(a) kondensationsfähige Gruppen aufweisende Organosiliciumverbindung,
(b) Organosiliciumverbindung mit mindestens drei Si-gebundenen hydrolysierbaren Resten,
(c) Kondensationskatalysator,
(d) Säurefänger
und gegebenenfalls
(e) weitere Stoffe
enthalten.

4. Verfahren gemäß Anspruch 1, **dadurch gekennzeichnet, dass** es sich um Massen auf der Basis von Organosiliciumverbindungen handelt, die durch Anlagerung von Si-gebundenem Wasserstoff an aliphatische Kohlenstoff-Kohlenstoff-Mehrfachbindung vernetzbar sind.

5. Verfahren gemäß Anspruch 4, **dadurch gekennzeichnet, dass** es sich bei den durch Additionreaktion vernetzbaren Massen um solche handelt, die
(1) Organosiliciumverbindungen, die SiC-gebundene Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die SiC-gebundene Reste mit aliphatischen Kohlenstoff-Kohlenstoff-Mehrfachbindungen und Si-gebundene Wasserstoffatome aufweisen,
(4) die Anlagerung von Si-gebundenem Wasserstoff an aliphatische Mehrfachbindung fördernden Katalysator,
(5) Säurefänger
und gegebenenfalls
(6) weitere Stoffe
enthalten.

6. Verfahren gemäß Anspruch 1, **dadurch gekennzeichnet, dass** es sich um peroxidisch vernetzbare Massen auf der Basis von Organosiliciumverbindungen handelt.

7. Verfahren gemäß Anspruch 6, **dadurch gekennzeichnet, dass** es sich bei den peroxidisch vernetzbaren Massen um solche handelt, die
(A) Organosiliciumverbindungen aus Einheiten der allgemeinen Formel
R⁵ᵣSiO_{(4-r)/2} (V),
worin
R⁵ gleich oder verschieden sein kann und einwertiger, gegebenenfalls substituierter Kohlenwasserstoffrest, Hydroxy- oder Alkoxyrest bedeutet und
r 0, 1, 2 oder 3 ist und einen durchschnittlichen Zahlenwert von 1,9 bis 2,1 hat,
(B) die Vernetzung über freie Radikale bewirkendes Agens,
(C) Säurefänger
und gegebenenfalls
(D) weitere Stoffe
enthalten.

8. Verfahren nach einem oder mehreren der Ansprüche 1 bis 7, **dadurch gekennzeichnet, dass** es sich bei den Säuren um Halogenwasserstoffe, wie HCl, HBr und HF, nitrose Gase und daraus generierte Säuren, H₂SO₃, H₂SO₄, Phosphorsäuren oder HCN handelt.

## Claims

1. Process for absorbing and neutralizing acids in a liquid or gaseous medium, **characterized in that** mouldings are used, produced by crosslinking materials based on organosilicon compounds which contain acid scavengers, which are crosslinkable to give elastomers, the mouldings being coatings.

2. Process according to Claim 1, **characterized in that** it relates to materials which are storable in the absence of water and are crosslinkable by condensation to give elastomers on admission of water at room temperature.

3. Process according to Claim 2, **characterized in that** the materials crosslinkable by condensation are those which contain
(a) organosilicon compound having condensable groups,
(b) organosilicon compound having at least three Si-bonded hydrolyzable radicals,
(c) a condensation catalyst,
(d) an acid scavenger
and optionally
(e) further substances.

4. Process according to Claim 1, **characterized in that** it relates to materials based on organosilicon compounds which are crosslinkable by addition of Si-bonded hydrogen at an aliphatic carbon-carbon multiple bond.

5. Process according to Claim 4, **characterized in that** the materials crosslinkable by addition reaction are those which contain
(1) organosilicon compounds which have SiC-bonded radicals with aliphatic carbon-carbon multiple bonds,
(2) organosilicon compounds having Si-bonded hydrogen atoms or, instead of (1) and (2),
(3) organosilicon compounds which have SiC-bonded radicals with aliphatic carbon-carbon multiple bonds and Si-bonded hydrogen atoms,
(4) a catalyst promoting the addition of Si-bonded hydrogen at an aliphatic multiple bond,
(5) an acid scavenger
and optionally
(6) further substances.

6. Process according to Claim 1, **characterized in that** it relates to materials crosslinkable using peroxides and based on organosilicon compounds.

7. Process according to Claim 6, **characterized in that** the materials crosslinkable using peroxides are those which contain
(A) organosilicon compounds comprising units of the general formula
R⁵ᵣSiO_{(4-r) /2} (V),
in which
R⁵ may be identical or different and is a monovalent, optionally substituted hydrocarbon radical or hydroxyl or alkoxy radical and
r is 0, 1, 2 or 3 and has an average numerical value of from 1.9 to 2.1,
(B) an agent effecting crosslinking via free radicals,
(C) an acid scavenger
and optionally
(D) further substances.

8. Process according to one or more of Claims 1 to 7, **characterized in that** the acids are hydrogen halides, such as HCl, HBr and HF, nitrous gases and acids generated therefrom, H₂SO₃, H₂SO₄, phosphoric acids or HCN.

## Revendications

1. Procédé pour l'absorption et la neutralisation d'acides en milieu liquide ou gazeux, **caractérisé en ce qu'**on utilise des corps moulés, produits par réticulation de matières, réticulables en élastomères, à base de composés organosiliciés, qui contiennent des capteurs d'acides, les corps moulés consistant en des revêtements.

2. Procédé selon la revendication 1, **caractérisé en ce qu'**il s'agit de matières aptes au stockage à l'abri de l'eau, réticulables par condensation en élastomères à la température ambiante, lors d'entrée d'eau.

3. Procédé selon la revendication 2, **caractérisé en ce que** les matières réticulables par condensation consistent en de telles matières qui contiennent
(a) un composé organosilicié comportant des groupes aptes à la condensation,
(b) un composé organosilicié comportant au moins trois radicaux hydrolysables liés à Si,
(c) un catalyseur de condensation,
(d) un capteur d'acide
et éventuellement
(e) d'autres substances.

4. Procédé selon la revendication 1, **caractérisé en ce qu'**il s'agit de matières à base de composés organosiliciés qui sont réticulables par fixation par addition d'hydrogène lié à Si sur une liaison multiple carbone-carbone aliphatique.

5. Procédé selon la revendication 4, **caractérisé en ce que** les matières réticulables par une réaction d'addition consistent en de telles matières qui contiennent
(1) des composés organosiliciés qui comportent des radicaux liés à SiC, à liaisons multiples carbone-carbone aliphatiques,
(2) des composés organosiliciés comportant des atomes d'hydrogène liés à Si ou, au lieu de (1) et (2),
(3) des composés organosiliciés qui comportent des radicaux liés à SiC, à liaisons multiples carbone-carbone aliphatiques, et des atomes d'hydrogène liés à Si,
(4) un catalyseur facilitant la fixation par addition d'hydrogène lié à Si sur une liaison multiple aliphatique,
(5) un capteur d'acide
et éventuellement
(6) d'autres substances.

6. Procédé selon la revendication 1, **caractérisé en ce qu'**il s'agit de matières réticulables à l'aide de peroxydes, à base de composés organosiliciés.

7. Procédé selon la revendication 6, **caractérisé en ce que** les matières réticulables à l'aide de peroxydes consistent en de telles matières qui contiennent
(A) des composés organosiliciés à base de motifs de formule générale
R⁵ᵣSiO_{(4-r) /2} (V),
dans laquelle
R⁵ peut être le même ou différent et représente un radical hydrocarboné monovalent éventuellement substitué, un radical hydroxy ou alcoxy et
r est 0, 1, 2 ou 3 et a une valeur numérique moyenne de 1,9 à 2,1,
(B) un agent provoquant la réticulation au moyen de radicaux libres,
(C) un capteur d'acide
et éventuellement
(D) d'autres substances.

8. Procédé selon une ou plusieurs des revendications 1 à 7, **caractérisé en ce que** les acides sont des hydracides halogénés, tels que HCl, HBr et HF, des gaz nitreux et des acides engendrés à partir de ceux-ci, H₂SO₃, H₂SO₄, des acides du phosphore ou HCN.
